# EUROPEAN PATENT APPLICATION

(11) **EP 3 396 175 A1**
(43) Date of publication of application: **31.10.2018**
(21) Application number: 18164278.6
(22) Date of filing: 27.03.2018
(51) Int. Cl.: F15B 11/20, F15B 13/07

(54) **HYDRAULIC SYSTEM**

(30) Priority: 27.03.2017 SE 1750362
(71) Applicant: HULTDIN SYSTEM AB, 930 70 Mala (SE)
(72) Inventor: ANDERSSON, Rickard, 937 92 Burträsk (SE)
(74) Representative: Reiner, Per Jörgen

(57) **Abstract**

A hydraulic system comprising a first hydraulic line (3) which is connected to a hydraulic fluid source, and a second hydraulic line (4) which is connected to a hydraulic receiver (5), as well as a first consumer (Ca) and a second consumer (Cb) which are connected in parallel with each other between the first hydraulic line and the second hydraulic line for being activated in sequence, said consumers each comprising a first hydraulic port (1a, 1b), which is connected to the first hydraulic line, and a second hydraulic port (2a, 2b), which is connected to the second hydraulic line. The hydraulic system comprises a valve device (6) which is connected between the second consumer and the second hydraulic line, said valve device comprising a first valve port (7), which is connected to the second hydraulic port of the second consumer, and a second valve port (8), which is connected to the second hydraulic line, said valve device being adapted to assume a first, closed valve state when the hydraulic pressure (Pin) in the first hydraulic line falls below a predetermined pressure (P0) and a second, open valve state when the hydraulic pressure in the first hydraulic line exceeds said predetermined pressure, wherein in said closed valve state, the valve device is adapted to prevent hydraulic fluid to flow from the second consumer to the second hydraulic line, and wherein in said open valve state, the valve device is adapted to allow hydraulic fluid to flow from the second consumer to the second hydraulic line.

## Description

The present invention relates to a hydraulic system comprising a first hydraulic line which is connected to a hydraulic fluid source, and a second hydraulic line which is connected to a hydraulic fluid receiver, as well as a first consumer and a second consumer which are connected in parallel with each other between the first hydraulic line and the second hydraulic line for being activated in sequence, said consumers each comprising a first hydraulic port which is connected to the first hydraulic line, and a second hydraulic port which is connected to the second hydraulic line.

The present invention also relates to a hydraulic machine comprising such a hydraulic system.

Furthermore, the invention relates to a method for sequentially controlling a first consumer and a second consumer in a hydraulic system, said consumers being connected in parallel between a first hydraulic line and a second hydraulic line, said first hydraulic line being connected to a hydraulic fluid source and said second hydraulic line being connected to a hydraulic fluid receiver, said consumers each comprising a first hydraulic port which is connected to the first hydraulic line, and a second hydraulic port which is connected to the second hydraulic line.

It is known to sequentially control hydraulic consumers, which means that two or several consumers connected to a common hydraulic line are activated in sequence one after another depending on the pre-set activation pressures of the consumers. Consumers which are sequentially controlled in this way can e.g. be hydraulic cylinders, hydraulic motors or other types of hydraulic devices and hydraulic machines.

Sequential control can be accomplished in several ways. For example, pressure limiters can be arranged in series along the hydraulic line with the consumers connected to the hydraulic line between the pressure limiters for being activated in sequence depending on the number of pressure limiters between the respective consumer and the hydraulic source. A disadvantage of this type of connection is that the available hydraulic pressure decreases the further down in the chain of pressure limiters the consumers are located. Special sequence valves can be utilized to increase available pressure for consumers late in the chain. A disadvantage with using sequence valves, however, is that when the sequence valve opens to activate a consumer, the hydraulic pressure at one or several of the already activated consumers may temporarily drop. This is a problem particularly if the latest activated consumer is not loaded at the moment of activation, which may imply that the hydraulic pressure across the latest connected consumer must be built up before the already activated consumers can reach their previous pressure levels. This may e.g. imply that a consumer in the form of a tool drops its load etc., depending on which function the consumer has.

It is an object of the present invention to provide a hydraulic system which at least partially reduces this problem.

The hydraulic system according to the invention is characterized in that it comprises a valve device which is connected between the second consumer and the second hydraulic line, said valve device comprising a first valve port which is connected to the second hydraulic port of the second consumer and a second valve port which is connected to the second hydraulic line, said valve device being adapted to assume a first, closed valve state when the hydraulic pressure in the first hydraulic line falls below a predetermined pressure and a second, open valve state when the hydraulic pressure in the first hydraulic line exceeds said predetermined pressure, wherein in said closed valve state, the valve device is adapted to prevent hydraulic fluid to flow from the second consumer to the second hydraulic line, and wherein in said open valve state, the valve device is adapted to allow hydraulic fluid to flow from the second consumer to the second hydraulic line.

Accordingly, the valve device is connected to the second consumer downstream thereof, wherein the second consumer is activated only when the valve device opens. During the time interval when the valve device opens, i.e. when the valve device switches from the completely closed valve state to the completely open valve state, the valve device provides a controllable resistance or load for the second consumer, said resistance gradually decreasing as the valve device approaches the open valve state. This means that the pressure drop across the second consumer is minimized during the activation even if the second consumer is not mechanically loaded at the moment of activation. Thereby, the valve device ensures that the hydraulic pressure in the first hydraulic line does not drop during the activation of the second consumer, which in its turn implies that the already activated first consumer does not experience any pressure drop when the second consumer is activated.

The valve device can comprise a valve body, e.g. a spool, which is movable between a closed position, in which the valve device is in said closed valve state, and an open position, in which the valve device is in said open valve state. The valve body can be pilot operated, via a pilot line which is connected to the first hydraulic line, to be moved from the closed position to the open position when the hydraulic pressure in the first hydraulic line exceeds said predetermined hydraulic pressure. Thereby, the flow opening of the valve device can be arranged such that it gradually changes from exhibiting no through-flow area to exhibiting maximum through-flow area as the valve body is moved from the closed position to the open position.

It can be advantageous if the valve device comprises a pressure device which is adapted to act on the valve body with a compressive force tending to bring the valve body toward the closed position, whereby the pressure device can be preloaded with a biasing force which is sufficient to maintain the valve body in the closed position until the hydraulic pressure in the first hydraulic line exceeds said predetermined hydraulic pressure.

It can be advantageous if the hydraulic system comprises on the one hand a return hydraulic line which is connected between the second consumer and the second hydraulic line in parallel with the valve device, and on the other hand a check valve which is arranged in the return hydraulic line, said check valve being adapted to allow flow of hydraulic fluid from the second hydraulic line to the second consumer and to prevent flow of hydraulic fluid from the second consumer to the second hydraulic line.

The hydraulic system according to the invention can in principle be arranged in any hydraulic machine comprising a first consumer and a second consumer where it is desirable to sequentially control the first and the second consumer.

Such a hydraulic machine can e.g. comprise a felling head comprising a gripping device and a cutting device, wherein said first consumer is a hydraulic cylinder adapted to operate the gripping device, and wherein said second consumer is a hydraulic cylinder adapted to operate the cutting device.

It is particularly advantageous to arrange a hydraulic system according to the invention in such a felling head. As is known, the felling head of a harvester is normally arranged at the outermost end of a felling arm of the harvester, wherein the gripping device is adapted to grasp a tree trunk to be cross-cut, whereupon the cutting device is adapted to cross-cut the tree trunk. The cutting device can e.g. comprise a pivotable chainsaw guide bar or knife which is operated by said second hydraulic cylinder. Accordingly, it is desirable to control the gripping device and the cutting device sequentially so that the cutting device is activated only when the gripping device has established a secure grip on the tree trunk. At the same time, it is desirable that the grip of the gripping device on the tree trunk is maintained during the entire cutting operation, including in connection with the activation of the cutting device.

In conventional sequential control systems, there is a risk that the hydraulic pressure of the hydraulic line feeding the gripping device and the cutting device momentarily drops in connection with activating the cutting device. This can lead to the grip of the gripping device around the tree trunk being released when the cutting device is activated, which in its turn can lead to the felling head being damaged.

By using the hydraulic system according to the invention in the above mentioned manner for sequentially controlling the gripping device and the cutting device, this problem is avoided since the valve device ensures that the pressure drop in the first hydraulic line, i.e. the hydraulic line feeding the gripping device and the cutting device, is minimized or eliminated entirely.

In the following, the invention will be described more closely with reference to the accompanying patent drawings, where like reference numerals indicate like components, if nothing else is stated or implicitly evident from the context.
Figure 1 shows schematically a hydraulic diagram of a hydraulic system comprising a sequential control valve according to an embodiment of the invention, said sequential control valve being in a closed state.
Figure 2 shows schematically a hydraulic diagram of a hydraulic system comprising a sequential control valve according to an embodiment of the invention, said sequential control valve being in an open state.

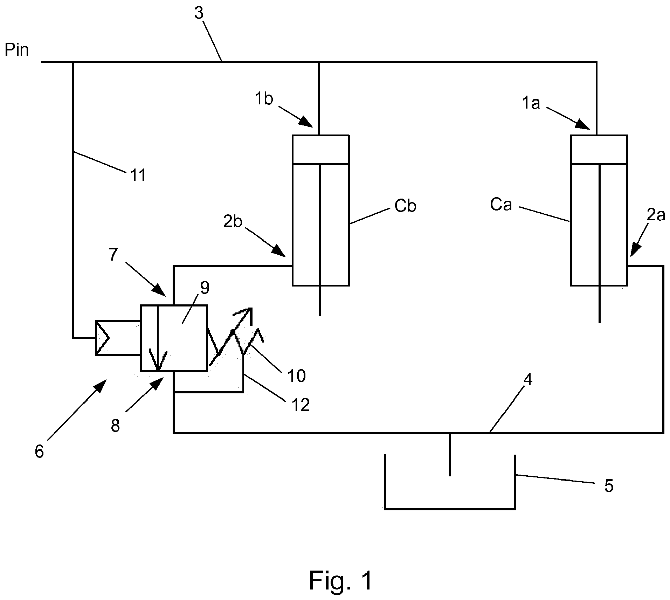

The hydraulic system illustrated in Figure 1 comprises a first consumer Ca and a second consumer Cb which are adapted to be sequentially controlled, i.e. arranged so that the first consumer Ca is to be activated before the second consumer Cb. In Figure 1, the consumers Ca and Cb have the form of hydraulic cylinders, but within the scope of the invention, the consumers Ca and Cb can in principle be any type of consumer which is to be activated in sequence, i.e. one before the other.

The hydraulic cylinder can e.g. be arranged in a felling head of a grapple harvester, where the first hydraulic cylinder Ca can be adapted to activate a gripping device, e.g. a gripping jaw, and the second hydraulic cylinder Cb a cutting device of the felling head, e.g. a chainsaw guide-bar or a knife. As is known within this technical field, the gripping device and the cutting device are adapted to be activated in sequence when felling a tree, i.e. the gripping device is to grasp the tree trunk before the cutting device is brought down and cross-cuts the tree trunk.

Each hydraulic cylinder Ca and Cb exhibits a first hydraulic port 1a, 1b and a second hydraulic port 2a, 2b. In the shown embodiment, the first hydraulic ports 1a, 1b are connected to the piston sides of the hydraulic cylinders, and the second hydraulic ports 2a, 2b are connected to the rod sides of the hydraulic cylinders.

The hydraulic system further comprises a first hydraulic line 3 and a second hydraulic line 4, between which hydraulic lines 3, 4 the hydraulic cylinders Ca and Cb are connected in parallel. The first hydraulic line 3 is connected to a hydraulic fluid source, which is indicated by Pin in the Figure, and the second hydraulic line 4 opens into a hydraulic fluid tank 5. Accordingly, the hydraulic cylinders Ca and Cb are driven by hydraulic fluid flowing from the hydraulic fluid source Pin to the hydraulic fluid tank 5 via the hydraulic cylinders Ca and Cb. The hydraulic fluid source can e.g. be a hydraulic pump.

The first hydraulic cylinder Ca is connected via its first hydraulic port 1a to the first hydraulic line 3 and via its second hydraulic port 2a to the second hydraulic line 4. Like the first consumer Ca, the second consumer Cb is connected via its first hydraulic port 1b to the first hydraulic line 3. The second hydraulic valve 2b of the second hydraulic cylinder Cb, however, is connected to the second hydraulic line 4 via a sequential control valve in the form of a valve device 6.

In the shown embodiment, the valve device 6 has the form of a normally closed pilot-operated 2/2 valve exhibiting a first valve port 7 which is connected to the second valve port 2b of the second consumer Cb and a second valve port 8 which is connected to the second hydraulic line 4. The valve device 6 comprises a valve body 9 which is movable between a first, closed position, where the valve ports 7 and 8 are not in hydraulic connection with each other so that hydraulic fluid cannot flow between the hydraulic ports 7 and 8, and a second, open position, where the valve ports 7 and 8 are in hydraulic connection with each other so that hydraulic fluid can flow from the hydraulic port 7 to the hydraulic port 8.

In other words, the valve device 6 is in a first, closed valve state when the valve body 9 is in its closed position and in a second, open valve state when the valve body 9 is in its open position. In Figure 1, the valve device 6 is in its closed valve state.

In the shown embodiment, the valve body 9 is a spool which is displaceable between said closed and open positions.

The hydraulic device 6 comprises a pressure device 10, in this case in the form of a compression spring, which acts on the spool 9 with a compressive force which moves the spool 9 toward the closed position. The valve device 6 further comprises a pilot line 11 whose hydraulic pressure acts on the spool 9 with a pressure force which moves the spool 9 toward its open position. The pilot line 11 is connected to the first valve line 3 and, consequently, the spool 9 is acted upon by the hydraulic pressure in the first hydraulic line 3. If the first hydraulic line 3 is not pressurized, the pressure device 10 brings the spool 9 to its closed state and the pressure device 10 thus ensures that the valve device 6 is normally closed.

In the following, the function of the hydraulic system will be described more closely.

In an initial state, where the hydraulic system is not pressurized, i.e. when the hydraulic pressure in the first hydraulic line 3 is zero or relatively low, the two hydraulic cylinders Ca and Cb are in a first, non-activated state, where the hydraulic cylinders Ca and Cb are in a retracted state, as shown in Figure 1. In this initial position, the valve device 6 is closed since the compressive force from the pressure device 10 exceeds the relatively low pressure force which the pilot line 11 transmits from the first hydraulic line 3 (because the hydraulic pressure in the first hydraulic line is zero or relatively low).

In an application where the first hydraulic cylinder Ca is adapted to activate a gripping device and the second hydraulic cylinder Cb a cutting device of a felling head, this initial state could represent a state where the felling head has been positioned around a tree trunk, but where the gripping device has not yet grasped the tree trunk.

When the hydraulic pressure in the first hydraulic line 3 is caused to rise, the first hydraulic cylinder Ca will be extended and hydraulic fluid on the rod side of the hydraulic cylinder Ca will be caused to flow to the hydraulic fluid tank 5 via the second hydraulic port 2a and the second hydraulic line 4. The second hydraulic cylinder Cb, however, will maintain its retracted state as long as the valve device 6 is closed, i.e. as long as the compressive force from the pressure device 10 exceeds the pressure force of the hydraulic fluid in the pilot line 11.

In the above-mentioned felling head application, this state may represent a state where the gripping device grasps the tree trunk and an increasing hydraulic pressure in the first hydraulic line 3 causes the hydraulic cylinder Ca to oppose the counter force with which the tree trunk acts on the gripping device as the gripping device increases the gripping force around the tree trunk.

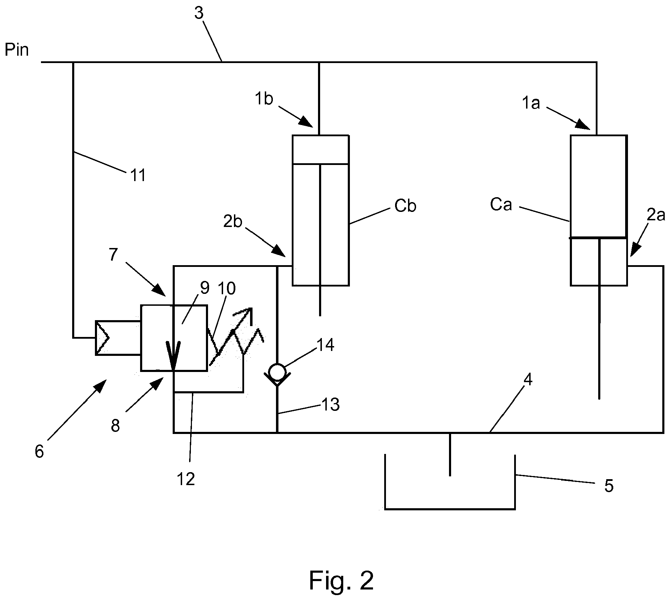

When the hydraulic pressure in the first hydraulic line 3 exceeds the pressure level P0, where the pressure force which the pilot line 11 transmits from the first hydraulic line 3 corresponds to the compressive force with which the pressure device 10 acts on the valve body 9, the valve body 9 will be brought from its closed position to its open position, as shown in Figure 2.

It is appreciated that this pressure level P0 can be set to a desired level by adjusting the compressive force of the pressure device 10, e.g. in the case where the pressure device 10 is a compression spring by preloading the compression spring to a desired level. In the felling head application, it is for instance preferred that the pressure level P0 is chosen so as to ensure a reliable gripping force of the gripping device.

Accordingly, the second hydraulic cylinder Cb is activated when Pin exceeds P0, wherein the second hydraulic cylinder Cb will be extended and the hydraulic fluid on the rod side of the hydraulic cylinder Cb will be caused to flow to the hydraulic fluid tank 5 via the second hydraulic port 2b, the valve device 6 and the second hydraulic line 4. In the felling head application, this state may represent a state where the gripping device has a secure grip around the tree trunk and the cutting device is brought down in a cutting movement.

The hydraulic pressure Pin in the first hydraulic line 3 is thus continuously available at the hydraulic port 1a so as to enable the first hydraulic cylinder Ca to produce a compressive force. When the hydraulic pressure Pin increases, also the compressive force produced by the first hydraulic cylinder Ca increases. However, as long as Pin is lower than the opening pressure of the valve device 6, i.e. as long Pin<P0, the second hydraulic cylinder Cb cannot produce any compressive force, since the fluid passage for the hydraulic fluid on the rod side of the hydraulic cylinder Cb is closed - this due to the fact that the valve device 6 is in its closed state as long as Pin<P0.

When the pre-set opening pressure P0 is reached, the valve device 6 starts to open and the hydraulic pressure Pin in the first hydraulic line 3 becomes available so as to enable also the second hydraulic cylinder Cb to produce a compressive force. However, if the counter force experienced by the second hydraulic cylinder Cb during opening of the valve device 6 is low, the valve device 6 will "oppose" the second hydraulic cylinder Cb until a counter force corresponding to the pre-set pressure P0 has been built up. This means that the hydraulic pressure in the first hydraulic line 3, and thereby also the hydraulic pressure across the first hydraulic cylinder Ca, never drops below the opening pressure P0 of the valve device 6. This in its turn implies that the compressive force produced by the first hydraulic cylinder Ca will be maintained during the time interval when the valve device 6 opens even if the second hydraulic cylinder Cb initially moves so easily that it in itself does not produce a sufficiently high pressure. When the load on the second hydraulic cylinder Cb increases, for example due to increasing load, and Pin permanently exceeds P0, the valve device 6 opens completely and allows the second hydraulic cylinder Cb to use full pressure, Pin.

In order to ensure the function of the pressure device 10, the valve device 6 can comprise a drainage line 12 for evacuating any hydraulic fluid penetrating into the chamber in which the pressure device 10 is disposed.

For the return of the hydraulic cylinders Ca and Cb, the second hydraulic line 4 can be pressurized 4 (and its fluid connection with the hydraulic tank 5 be interrupted). In order to avoid that hydraulic fluid passes the valve device 6 during the return, a return hydraulic line 13 can be arranged in parallel with the valve device 6 and a check valve 14 be arranged in the hydraulic line, said check valve 14 allowing flow of hydraulic fluid from the second hydraulic line 4 to the second consumer Cb, but preventing flow of hydraulic fluid in the other direction. Alternatively, the check valve 12 can be substituted with other valve variants if it is desirable to decide the order of return of the hydraulic cylinders Ca, Cb. Such valves are known per se and will not be described more closely here.

In the foregoing, the invention has been described starting from a number of embodiments. However, the skilled person will appreciate that other embodiments or variations thereof are possible within the scope of the following claims.

## Claims

1. A hydraulic system comprising a first hydraulic line (3) which is connected to a hydraulic fluid source, and a second hydraulic line (4) which is connected to a hydraulic fluid receiver (5), as well as a first consumer (Ca) and a second consumer (Cb) which are connected in parallel with each other between the first hydraulic line (3) and the second hydraulic line (4) for being activated in sequence, said consumers (Ca, Cb) each comprising a first hydraulic port (1a, 1b) which is connected to the first hydraulic line (3), and a second hydraulic port (2a, 2b) which is connected to the second hydraulic line (4), **characterized in that** the hydraulic system comprises a valve device (6) which is connected between the second consumer (Cb) and the second hydraulic line (4), said valve device (6) comprising a first valve port (7) which is connected to the second hydraulic port (2b) of the second consumer (Cb) and a second valve port (8) which is connected to the second hydraulic line (4), said valve device (6) being adapted to assume a first, closed valve state when the hydraulic pressure (Pin) in the first hydraulic line (3) falls below a predetermined pressure (P0), and a second, open valve state when the hydraulic pressure (Pin) in the first hydraulic line (3) exceeds said predetermined pressure (P0), wherein in said closed valve state, the valve device (6) is adapted to prevent hydraulic fluid to flow from the second consumer (Cb) to the second hydraulic line (4), and wherein in said open valve state, the valve device (6) is adapted to allow hydraulic fluid to flow from the second consumer (Cb) to the second hydraulic line (4).

2. The hydraulic system according to claim 1, **characterized in that** the valve device (6) comprises a valve body (9), which is movable between a closed position, in which the valve device (6) is in said closed valve state, and an open position, in which the valve device (6) is in said open valve state, said valve body (9) being pilot operated via a pilot line (11), which is connected to the first hydraulic line (3), to be moved from the closed position to the open position when the hydraulic pressure (Pin) in the first hydraulic line (3) exceeds said predetermined hydraulic pressure (P0).

3. The hydraulic system according to claim 2, **characterized in that** the valve device (6) comprises a pressure device (10) which is adapted to act on the valve body (9) with a compressive force tending to bring the valve body (9) toward the closed position.

4. The hydraulic system according to claim 3, **characterized in that** the pressure device (10) is preloaded with a biasing force which is sufficient to maintain the valve body (9) in the closed position until the hydraulic pressure (Pin) in the first hydraulic line (3) exceeds said predetermined hydraulic pressure (P0).

5. The hydraulic system according to any one of the preceding claims, **characterized in that** it comprises a return hydraulic line (13) which is connected between the second consumer (Cb) and the second hydraulic line (4) in parallel with the valve device (6) and a check valve (14) which is arranged in the return hydraulic line (13), said check valve (14) being adapted to allow flow of hydraulic fluid from the second hydraulic line (4) to the second consumer (Cb) and to prevent flow of hydraulic fluid from the second consumer (Cb) to the second hydraulic line (4).

6. A hydraulic machine comprising a first consumer (Ca), a second consumer (Cb), said consumers being sequentially controlled, **characterized in that** the hydraulic machine comprises a hydraulic system according to any one of the claims 15 for the sequential control of the consumers (Ca, Cb).

7. The hydraulic machine according to claim 6, wherein the hydraulic machine comprises a felling head comprising a gripping device and a cutting device, wherein said first consumer (Ca) is a hydraulic cylinder adapted to operate the gripping device, and wherein said second consumer (Cb) is a hydraulic cylinder adapted to operate the cutting device.

8. A forestry machine, **characterized in that** it comprises a hydraulic machine according to claim 7.

9. A method for sequentially controlling a first consumer (Ca) and a second consumer (Cb) in a hydraulic system, said consumers (Ca, Cb) being connected in parallel between a first hydraulic line (3) and a second hydraulic line (4), said first hydraulic line (3) being connected to a hydraulic fluid source and said second hydraulic line (4) being connected to a hydraulic fluid receiver (5), said consumers (Ca, Cb) each comprising a first hydraulic port (1a, 1b) which is connected to the first hydraulic line (3) and a second hydraulic port (2a, 2b) which is connected to the second hydraulic line (4), **characterized in that** a valve device (6) is arranged between the second consumer (Cb) and the second hydraulic line (4), wherein said valve device (6) is caused to assume a first, closed valve state when the hydraulic pressure (Pin) in the first hydraulic line (3) falls below a predetermined pressure (P0) and a second, open valve state when the hydraulic pressure (Pin) in the first hydraulic line (3) exceeds said predetermined pressure (P0), wherein in said closed valve state, the valve device (6) prevents hydraulic fluid to flow from the second consumer (Cb) to the second hydraulic line (4), and wherein in said open valve state, the valve device (6) allows hydraulic fluid to flow from the second consumer (Cb) to the second hydraulic line (4).
